# EUROPEAN PATENT APPLICATION

(11) **EP 2 770 346 A2**
(43) Date of publication of application: **27.08.2014**
(21) Application number: 14155833.8
(22) Date of filing: 19.02.2014
(51) Int. Cl.: G01V 1/38

(54) **Far-Field Detection Device, System and Method**

(30) Priority: 22.02.2013 US 201361767859 P
(71) Applicant: CGG Services SA, 91300 Massy (FR)
(72) Inventor: VESIN, Anne, 91300 MASSY (FR); PAYEN, Thierry, 91300 MASSY (FR)
(74) Representative: Regimbeau

(57) **Abstract**

A far-field detection apparatus (100) for measuring a far-field signature of a seismic source (200) includes a main tow cable (100), a depth control device (120), sensor lines (130, 140), at least two deflectors (150, 160) and seismic sensors (136, 146). The depth control device is attached to the main tow cable. Each of the sensor lines has a first end attached to the main tow cable. Each of the deflectors is attached to a second end of the sensor lines, respectively. The deflectors are configured to generate forces pulling the sensor lines away from the main tow cable. The seismic sensors are attached between the first end and the second end of each of the sensor lines. The seismic sensors are configured to measure seismic waves generated by the seismic source.

## Description

### CROSS REFERENCE TO RELATED APPLICATIONS

This application claims priority and benefit from U.S. Provisional Patent Application No. 61/767,859, filed February 22, 2013, entitled "Far Field Carpet," the content of which is incorporated in its entirety herein by reference.

### BACKGROUND

### TECHNICAL FIELD

Embodiments of the subject matter disclosed herein generally relate to devices incorporating plural seismic sensors used to detect the far-field signature of a marine seismic source, systems including such devices and related methods. Particularly, an operational geometry of the seismic sensors is characterized by a wide arrangement relative to the towing direction.

### DISCUSSION OF THE BACKGROUND

During the past years, offshore drilling has continually increased. Given high costs and risks associated with offshore drilling, in order to avoid a dry well, marine seismic surveys are used to generate a profile (image) of the geophysical structure under the seafloor. While this profile does not provide an accurate location for oil and gas, it suggests, to those trained in the field, the presence or absence of oil and/or gas.

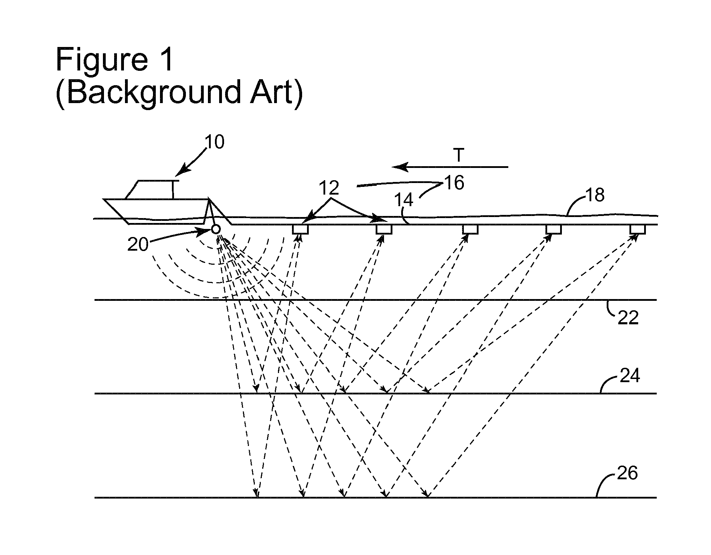

During a seismic gathering process, as shown in Figure 1, a vessel 10 tows an array of seismic detectors 12 in direction T. The seismic detectors 12 are distributed along a cable 14. Cable 14, together with its corresponding detectors 12, is called a streamer 16. Vessel 10 may tow plural streamers 16 at the same time, and they may be disposed horizontally, i.e., lie at a constant depth relative to the ocean surface 18, or may lie such as to have a variable depth profile.

Vessel 10 also tows a seismic source 20 configured to generate seismic waves. Seismic source 20 typically consists of one or more arrays of individual seismic sources (such as air guns) distributed in a predetermined geometry (e.g., along plural tow cables). The individual seismic sources of each array are synchronized to fire at approximately the same time. At great enough distances (e.g., over 100 m) from the array, seismic waves generated by each of the individual sources combine into a single seismic wave propagating toward the seafloor, which is known as the far-field signature of the seismic source.

The seismic wave penetrates the solid structure under the seafloor 22 and is at least partially reflected by interfaces 24 or 26 between layers having different seismic wave propagation speeds. The reflected waves are detected by the seismic detectors 12. The time delay between firing the individual seismic sources and detecting a related reflection (i.e., two-way travel time) provides information about the interface's location (depth). The directionality and far-field signature of the seismic wave from the source is important for seismic data processing.

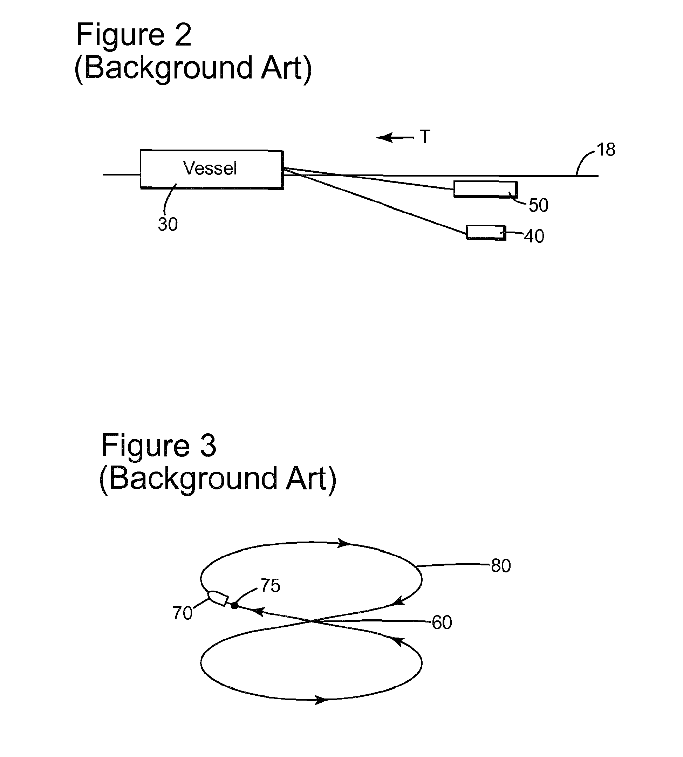

Conventionally, to detect a seismic source's far-field signature and directionality, a vessel 30 tows a hydrophone 40 at more than 100 m under a seismic source array 50 (as illustrated in Figure 2). Occasionally, plural hydrophones (for example, three longitudinally-arranged hydrophones) have been used. Seismic source array 50 and towed hydrophone 40 (or the longitudinally-arranged hydrophones) may easily drift laterally relative to one another, compromising detection of the direct wave from the seismic source.

Another conventional method for detecting a seismic source's far-field signature and directionality employs the setup illustrated in Figure 3 (a bird's-eye view). A stationary buoy 60 with submerged hydrophones attached underneath over 100 m below the seismic source's towing depth is maintained in a stationary position. A vessel 70 tows repeatedly a seismic source 75 on trajectory 80, to bring the seismic source 75 above the hydrophones. Towed seismic source 75 is then fired so that the hydrophones detect source's far-field signature based on the seismic waves traveling directly from the source to the hydrophones. This method has the drawback that it is time consuming and the disadvantage that it is difficult to have the source exactly vertically above to the hydrophones. Moreover, buoy's position has also to be considered as vessel 70 moves in its proximity.

A main disadvantage of conventional methods is that the seismic source and the seismic detectors may easily drift relative to one another, thereby compromising the detection. This problem is so prevalent that software simulations are preferred to actual measurements for evaluating a seismic source's far-field signature. However, a simulated result is only as good as the phenomenological model implemented in the software. In the context of a complex reality and various increasingly complex individual seismic sources, it would be desirable to provide devices, systems and methods for efficiently detecting a seismic source's far-field signature while avoiding the afore-described problems and drawbacks.

### SUMMARY

The far-field detection of source signature using various embodiments provides the advantage of greater ease in collocating on the same vertical line the source and seismic detectors, and allowing directivity measurements.

According to one embodiment, there is a far-field detection apparatus usable for measuring a seismic source's signature. The apparatus includes a main tow cable, a depth control device, sensor lines, at least two deflectors and seismic sensors. The main tow cable is configured to enable towing. The depth control device is attached to the main tow cable. Each of the sensor lines has a first end attached to the main tow cable. Each of the deflectors is attached to a second end of the sensor lines, respectively. The deflectors are configured to generate forces pulling the sensor lines away from the main tow cable. The seismic sensors are attached between the first end and the second end of each of the sensor lines. The seismic sensors are configured to measure seismic waves.

According to another embodiment, a marine seismic survey system includes (A) a seismic source configured to be towed by a survey vessel and to generate seismic waves directed toward a water bottom surface, and (B) a far-field detection apparatus configured to be towed by the survey vessel vertically below the seismic source. The far-field detection apparatus includes a depth control device, sensor lines and a support structure. The depth control device is attached to a main tow cable. The sensor lines have a proximal end attached to the main tow cable and carry seismic sensors configured to measure seismic waves. The support structure is configured to enable an operational geometry of the sensor lines such that a cross-line width covered by the sensor lines perpendicular to a towing direction is larger than the seismic source's width.

According to another embodiment, there is a method for acquiring data usable to determine a seismic source's far-field signature. The method includes deploying a seismic source towed by a survey vessel and deploying a far-field detection apparatus at a predetermined depth under the seismic source. The farfield detection apparatus includes sensor lines extending away from a towing direction such that a cross-line width covered by the sensor lines, perpendicular to the towing direction, is larger than a width of the seismic source, and carrying seismic sensors configured to measure direct seismic waves the seismic source generates. The method further includes activating the towed seismic source to generate seismic waves and acquiring data related to the seismic waves using the seismic sensors.

According to another embodiment, there is a far-field detection apparatus usable for measuring signature of a seismic source. The apparatus include seismic sensors configured to measure seismic waves and a support structure. The support structure is configured to tow the seismic sensors at a predetermined depth while the seismic sensors are arranged substantially along a line to cover a predetermined width perpendicular to a towing direction.

### BRIEF DESCRIPTION OF THE DRAWINGS

The accompanying drawings, which are incorporated in and constitute a part of the specification, illustrate one or more embodiments and, together with the description, explain these embodiments. In the drawings:
Figure 1 is a schematic diagram of a seismic survey system;
Figure 2 is a schematic diagram of a conventional setup for detecting a seismic source's far-field signature;
Figure 3 is a schematic diagram of another conventional setup for detecting a seismic source's far-field signature;
Figure 4 is a schematic diagram of an apparatus for detecting a seismic source's far-field signature according to an embodiment;
Figures 5A and 5B illustrate operational arrangements for measuring a seismic source's far-field signature according to an embodiment;
Figure 6 illustrates an apparatus for detecting a seismic source's farfield signature according to another embodiment;
Figure 7 illustrates a marine seismic survey system configured to detect a seismic source's far-field signature according to an embodiment; and
Figure 8 is a flowchart illustrating steps performed by a method acquiring data usable to determine a seismic source's far-field signature according to an embodiment.

### DETAILED DESCRIPTION

The following description of the exemplary embodiments refers to the accompanying drawings. The same reference numbers in different drawings identify the same or similar elements. The following detailed description does not limit the invention. Instead, the scope of the invention is defined by the appended claims. The following embodiments are discussed, for simplicity, with regard to the terminology and structure of a marine seismic survey system. However, the embodiments to be discussed next are not limited to these structures, but may be applied to other situations in which a two-dimensional arrangement of seismic detectors is deployed underwater and towed.

Reference throughout the specification to "one embodiment" or "an embodiment" means that a particular feature, structure or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments.

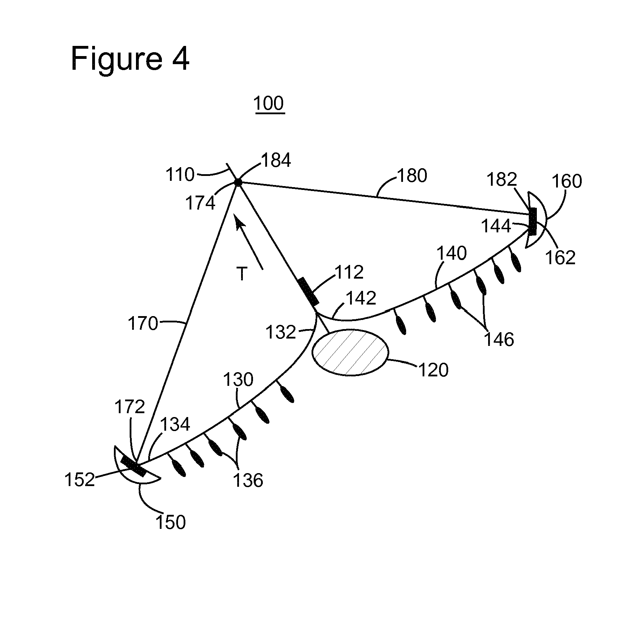

Figure 4 is a schematic diagram of a far-field detection apparatus 100 according to an embodiment. This apparatus is designed for measuring far-field signature of a seismic source, but it may also be used to listen to marine mammals or to determine zero-offset data for a survey (which data is used in various stages during processing of seismic data). A main tow cable 110 is attached to a vessel (not shown) to pull the apparatus in towing direction T. Although it is illustrated and called a (i.e., one) main cable, the term "main cable" may correspond to plural cables and other elements arranged to enable towing of the apparatus and having other components of the apparatus attached as described below.

A depth control device 120 is attached to the main tow cable 110. Depth control device 120 is configured to generate a sinking force, thus enabling towing of the apparatus at a desired depth, over 100 m deeper than the level of the seismic source. In one embodiment, depth control device 120 may be a passive mass, for example, of 200 kg. Knowing (A) the force due to the passive mass or other equivalent means and (B) the water resistance at the towing speed renders predictable and, thus, controllable the depth of towing far-field detection apparatus 100.

In another embodiment, depth control device 120 may be a depressor wing configured to generate a downward lift. This depressor wing may have adjustable parts that enable varying the downward lift within a predetermined range. Knowing (A) the downward lift due to the depressor and (B) the water resistance at towing speed renders predictable and, thus, controllable the depth of towing far-field detection apparatus 100.

Far-field detection apparatus 100 further includes sensor lines 130 and 140 configured to extend away from main tow cable 110. In one embodiment a single sensor line may be present. In another embodiment, sensor lines 130 and 140 may actually be a single cable attached to the main cable at a predetermined position (e.g., in the middle of this single cable). Each of the sensor lines has first ends 132 and 142, respectively, attached to main tow cable 110. The first ends of sensor lines 130 and 140 may be attached at the same position along the main tow cable, e.g., close to a location where depth control device 120 is attached. Sensor lines 130 and 140 may extend up to 50 m away from main tow cable 110, laterally relative to towing direction T. In an operational state, the sensor lines may make a 60-90° angle with towing direction T.

At the other (second) end 134 and 144, respectively, of sensor lines 130 and 140 are attached deflectors 150 and 160. In a navigation type of naming equipment relative to towing direction T, deflector 150 is called the port deflector and deflector 160 is called the starboard deflector, but this naming convention does not imply any particular constructive features or limitations. Deflectors 150 and 160 are configured to generate forces pulling sensor lines 130 and 140, respectively, laterally, away from main tow cable 110. Other devices besides deflectors may be used to control/adjust lateral position of sensor lines second ends 134 and 144.

Seismic sensors 136 and 146 (only few of the seismic sensors illustrated in Figure 4 are labeled) are attached between the first end and the second end of each of sensor lines 130 and 140. Seismic sensors 146 are configured to measure direct seismic waves the seismic source generates. Seismic sensors 136 and 146 may be hydrophones. Plural sensors (of different types or arranged according to a desirable geometry) may be attached at the same position along the sensor lines. At least two seismic sensors are attached to each of the sensor lines, but 20-30 seismic sensors may be attached when sensor lines are, for example, 50 m long. The numbers of sensors illustrated in Figure 4 and specified above are merely exemplary and not intended to be limiting. Seismic sensors may be attached to the sensor lines so as to have substantially equal distances there-between.

Far-field detection apparatus 100 further includes deflector towing lines 170 and 180, respectively. Deflector towing line 170 has one end 172 attached to deflector 150 and another end 174 attached to main tow cable 110, at a predetermined distance ahead of the location where the first end 132 of sensor line 130 is attached thereto. The predetermined distance (e.g., 10 m) is selected to enhance stability of the assembly's geometry while towed underwater. Similarly, deflector towing line 180 has one end 182 attached to deflector 160 and another end 184 attached to the main tow cable 110, ahead of the location where the first end 142 of sensor line 140 is attached.

Far-field detection apparatus 100 may further include positioning devices attached at various positions along sensor lines 130 and 140 and/or main tow cable 110. The positioning devices are configured to enable determining their respective positions. In one embodiment, they are underwater acoustic positioning devices (such as ultra short base line, USBL, beacons) configured to enable determining their respective positions relative to an acoustic reference, which may be an acoustic base located onboard or close to the vessel.

In Figure 4, a positioning device 112 is located on the main tow cable 110, close to where sensor lines 130 and 140 are attached, and positioning devices 152 and 162 are close to ends 134 and 144, on or near deflectors 150 and 160, respectively. Additional positioning devices may be placed on the sensor lines.

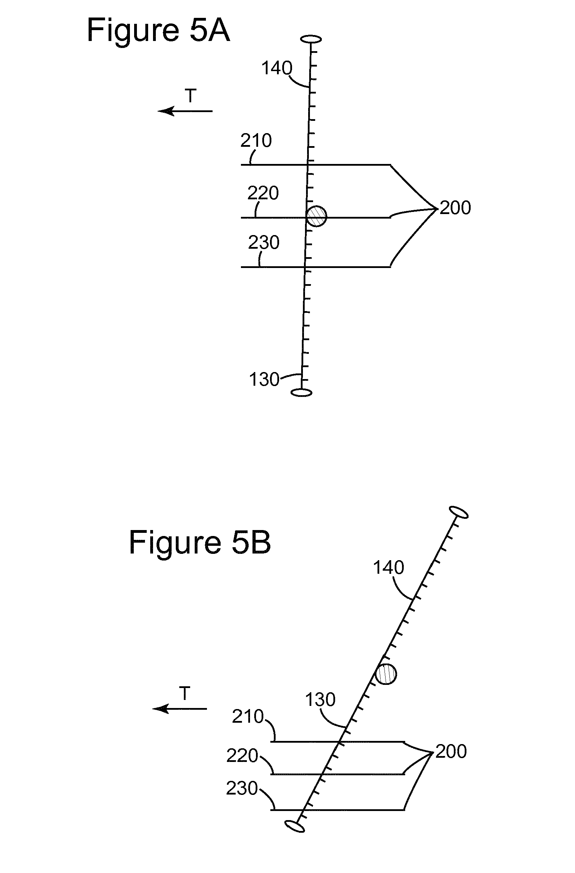

Unlike the conventional methods illustrated in Figures 2 and 3, far-field detection apparatus 100 has a cross-line width covered by the sensor lines perpendicular to the towing direction, larger than a width of the seismic source generating measured waves. Ideally (without current), as illustrated in Figure 5A for a bird's eye view, sensor lines 130 and 140 extend perpendicular to the towing direction. Thus, the sensor lines may cover, for example, 100 m width, while a source array 200 having three individual source cables 210, 220 and 230 with about 8 m there-between has a width of about 16 m. Even if currents are present and sensor lines 130 and 140 drift relative to the source no longer being perpendicular to the towing direction as illustrated in Figure 5B, the sensor lines are likely to remain under the source 200.

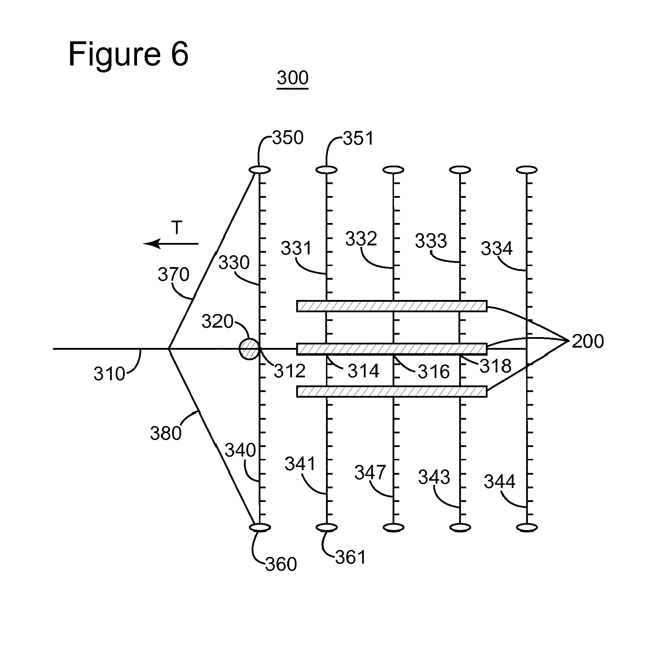

According to another embodiment illustrated in Figure 6, a far-field "carpet" 300 may be assembled by attaching plural pairs of sensor lines 330 and 340, 331 and 341, 332 and 342, etc. (each pair including a starboard sensor line and a port sensor line) at different positions 312, 314, etc. along the main tow cable 310. The distance between positions 312, 314, etc. may be 5-8 m. The advantage of this embodiment is that it covers an area exceeding that covered by source 200 not only in width, but also in length. At least one depth control device 320 is attached to main tow cable 310. In the illustrated embodiment, depth control device 320 is attached in the front area covered by the sensor lines. However, in other embodiments, depth control device 320 may be attached in the middle of the area, or plural depth control devices may be attached along the main cable in the area covered by the sensor lines.

Deflectors 350, 360, 351, 361, etc. and deflector towing lines 370 and 380 are present and connected at least to a first (in towing direction) pair of sensor lines, 330 and 340. However, the support structure may include deflectors attached to other sensor lines and ropes attaching the sensor lines to one another (besides or instead of deflectors tow lines).

In one embodiment, vertical sensor lines may be provided in addition or instead of a substantially horizontal sensor line distribution.

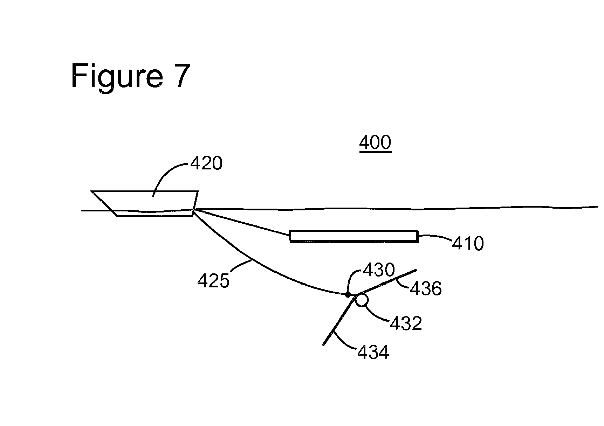

Figure 7 illustrates a marine seismic survey system 400 according to an embodiment. Marine seismic survey system 400 includes a seismic source 410 configured to be towed by a survey vessel 420. Seismic source 410 generating seismic waves directed toward the water's bottom surface. A far-field detection apparatus 430 is towed by survey vessel 420 under seismic source 410. Far-field detection apparatus 430 may be similar to any already described embodiments, including far-field "carpet" 300.

Far-field detection apparatus 430 includes a depth control device 432, sensor lines 434 and 436 and a support structure. Depth control device 432 is attached to main tow cable 425 and configured to generate a sinking force. In some embodiments, plural depth control devices may be attached to main tow cable in different positions. Sensor lines 434 and 436 have a proximal end attached to the main tow cable and carry seismic sensors configured to measure direct seismic waves seismic source 410 generates.

The support structure is configured to enable an operational geometry of sensor lines 434 and 436 such that a cross-line width covered by the sensor lines perpendicular to a towing direction is larger than the seismic source 410's width.

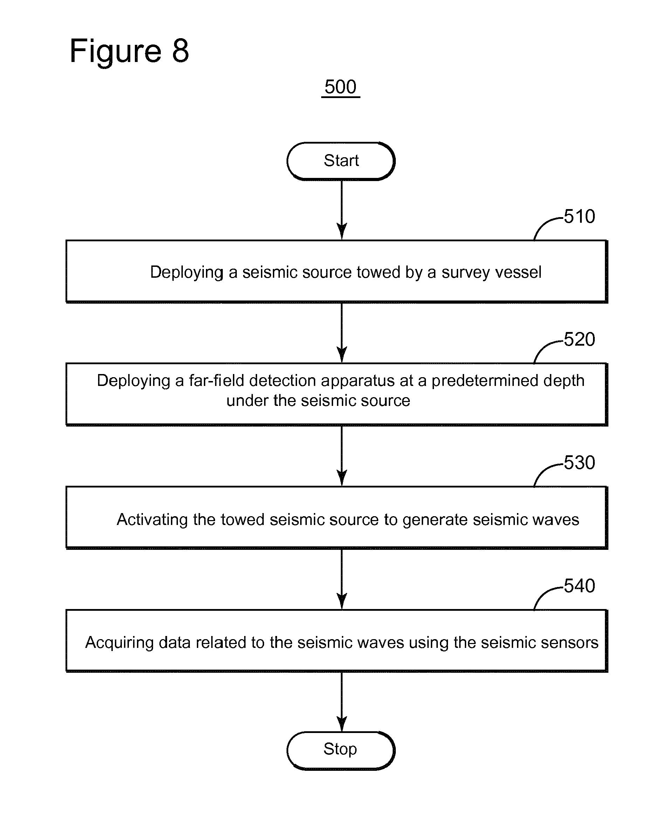

Figure 8 illustrates a method 500 for acquiring data usable to determine a seismic source's far-field signature according to an embodiment. Method 500 includes deploying a seismic source towed by a survey vessel at 510, and deploying a far-field detection apparatus at a predetermined depth under the seismic source, at 520. The far-field detection apparatus includes sensor lines having a proximal end attached to a main tow cable and carrying seismic sensors configured to measure direct seismic waves the seismic source generates.

Method 500 further includes activating the towed seismic source to generate seismic waves, at 530, and acquiring data related to the seismic waves using the seismic sensors, at 540. The sensor lines are arranged such that a cross-line width covered by the sensor lines perpendicular to a towing direction is larger than the seismic source's width.

Such measurements for detecting the far-field signature and directionality of a source may be performed prior to deploying the streamers. The far-field detection apparatus may be recovered prior to regular seismic surveys.

The disclosed exemplary embodiments provide a far-field detection apparatus and related method. It should be understood that this description is not intended to limit the invention. On the contrary, the exemplary embodiments are intended to cover alternatives, modifications and equivalents, which are included in the spirit and scope of the invention as defined by the appended claims. Further, in the detailed description of the exemplary embodiments, numerous specific details are set forth in order to provide a comprehensive understanding of the claimed invention. However, one skilled in the art would understand that various embodiments may be practiced without such specific details.

Although the features and elements of the present exemplary embodiments are described in the embodiments in particular combinations, each feature or element can be used alone without the other features and elements of the embodiments or in various combinations with or without other features and elements disclosed herein.

This written description uses examples of the subject matter disclosed to enable any person skilled in the art to practice the same, including making and using any devices or systems and performing any incorporated methods. The patentable scope of the subject matter is defined by the claims, and may include other examples that occur to those skilled in the art. Such other examples are intended to be within the scope of the claims.

## Claims

1. A far-field detection apparatus (100) usable for measuring a far-field signature of a seismic source (200), the apparatus comprising:
a main tow cable (110) configured to enable towing;
a depth control device (120) attached to the main tow cable;
sensor lines (130, 140), each of the sensor lines having a first end (132, 142) attached to the main tow cable;
at least two deflectors (150, 160), each deflector being attached to a second end of one of the sensor lines, respectively, the deflectors being configured to generate forces pulling the sensor lines away from the main tow cable; and
seismic sensors (136, 146) attached between the first end and the second end of each of the sensor lines, the seismic sensors being configured to measure seismic waves.

2. The far-field detection apparatus of claim 1, wherein the depth control device and the sensor lines are towed at least 100 m deeper than the seismic source generating the seismic wave.

3. The far-field detection apparatus of claim 1, further comprising:
deflector towing lines, each of the deflector towing lines having (A) one end attached to one of the deflectors, and (B) another end attached to the main tow cable, at a predetermined distance ahead along a towing direction relative to a location where the first end of one of the sensor lines is attached.

4. The far-field detection apparatus of claim 1, further comprising:
positioning devices attached at various positions along the sensor lines and/or the main tow cable, the positioning devices being configured to enable determining their respective positions.

5. The far-field detection apparatus of claim 4, wherein the positioning devices are underwater acoustic positioning devices configured to enable determining their respective positions relative to an acoustic reference.

6. The far-field detection apparatus of claim 4, wherein the positioning devices include at least one positioning device attached to the main tow cable close to the depth control device, and end-of-sensor-line positioning devices, each of the end-of-sensor-line positioning devices being attached close to each of the second end of one of the sensor lines.

7. The far-field detection apparatus of claim 1, wherein the depth control device is a passive mass.

8. The far-field detection apparatus of claim 1, wherein the depth control device is a depressor wing configured to generate a downward lift.

9. The far-field detection apparatus of claim 1, wherein the seismic sensors are attached to the sensor lines to have substantial equal distances there-between.

10. The far-field detection apparatus of claim 1, wherein the sensor lines and the deflectors are configured such that while towed, a cross-line width covered by the sensor lines perpendicular to a towing direction is larger than a width of the seismic source.

11. The far-field detection apparatus of claim 1, wherein at least two of the sensor lines have respective first ends attached at different positions along the main tow cable.

12. The far-field detection apparatus of claim 11, wherein
at each of the different positions are attached two sensor lines extending on opposite sides of the main tow cable, and
a distance between the different positions is between 5 and 8 m.

13. A marine seismic survey system (400), comprising:
a seismic source (410) configured to be towed by a survey vessel and to generate seismic waves directed toward a water bottom surface; and
a far-field detection apparatus (430, 100, 300) configured to be towed by the survey vessel substantially vertically below the seismic source, the device including:
a depth control device (432, 120, 320) attached to a main tow cable;
sensor lines (434, 436, 130, 140) having a proximal end attached to the main tow cable and carrying seismic sensors configured to measure seismic waves; and
a support structure (150, 160, 170, 180, 350, 360 370, 380) configured to enable an operational geometry of the sensor lines such that a cross-line width covered by the sensor lines perpendicular to a towing direction, is larger than a width of the seismic source.

14. A method (500) for acquiring data useable to determine a seismic source's far-field signature, the method comprising:
deploying (510) a seismic source towed by a survey vessel;
deploying (520) a far-field detection apparatus at a predetermined depth vertically below the seismic source, the far-field detection apparatus including sensor lines extending away from a towing direction such that a cross-line width covered by the sensor lines, perpendicular to the towing direction, is larger than a width of the seismic source, and carrying seismic sensors configured to measure seismic waves;
activating (530) the towed seismic source to generate seismic waves; and
acquiring (540) data related to the seismic waves using the seismic sensors of the far-field detection apparatus.

15. A far-field detection apparatus (100) usable for measuring signature of a seismic source (200), the apparatus comprising:
seismic sensors (136, 146) configured to measure seismic waves; and
a support structure (110, 120, 130, 140, 150, 160) configured to tow the seismic sensors at a predetermined depth while the seismic sensors are arranged substantially along a line to cover a predetermined width perpendicular to a towing direction, the width being larger than a width of the seismic source.
